(19)

(11) **EP 2 580 714 B1**

(12) # EUROPÄISCHE PATENTSCHRIFT

(45) Veröffentlichungstag und Bekanntmachung des Hinweises auf die Patenterteilung:
**12.02.2020 Patentblatt 2020/07**

(21) Anmeldenummer: **11734028.1**

(22) Anmeldetag: **10.06.2011**

(51) Int Cl.:
***G06K 19/067*** (2006.01) ***G06K 7/08*** (2006.01)

(86) Internationale Anmeldenummer:
**PCT/EP2011/059685**

(87) Internationale Veröffentlichungsnummer:
**WO 2011/154524 (15.12.2011 Gazette 2011/50)**

(54) **SYSTEM MIT KAPAZITIVEM INFORMATIONSTRÄGER ZUR ERFASSUNG VON INFORMATIONEN**

SYSTEM COMPRISING A CAPACITIVE INFORMATION CARRIER FOR ACQUIRING INFORMATION

SYSTÈME DOTÉ D'UN SUPPORT D'INFORMATIONS CAPACITIF SERVANT À DÉTECTER DES INFORMATIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:
**05.08.2010 DE 202010011032 U**
**05.08.2010 EP 10075337**
**05.08.2010 US 371035 P**
**11.06.2010 US 353955 P**
**11.06.2010 EP 10006067**

(43) Veröffentlichungstag der Anmeldung:
**17.04.2013 Patentblatt 2013/16**

(73) Patentinhaber: **Touchcode Technologies, LLC**
**New York NY 10019 (US)**

(72) Erfinder:
- **THIELE, Jan**
  **09127 Chemnitz (DE)**
- **VOIGT, Sascha**
  **09337 Bernsdorf (DE)**
- **FRANZ, Thoralt**
  **08297 Zwönitz/Brünlos (DE)**
- **FÖRSTER, Matthias**
  **01307 Dresden (DE)**
- **KREUTZER, André**
  **09648 Mittweida (DE)**

(74) Vertreter: **Hoffmann Eitle**
**Patent- und Rechtsanwälte PartmbB**
**Arabellastraße 30**
**81925 München (DE)**

(56) Entgegenhaltungen:
**EP-A1- 2 088 532** **DE-A1-102005 042 089**
**US-A1- 2006 097 991**

- **Anonymous: "mTouch Projected Capacitive Touch Screen Sensing Theory of Operation", , 5 January 2010 (2010-01-05), pages 1-16, XP055173634, ISBN: 978-1-60-932466-7 Retrieved from the Internet: URL:http://www.microchip.com/stellent/groups/techpub_sg/documents/devicedoc/en550192.pdf [retrieved on 2015-03-04]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung beschreibt ein System, umfassend einen kapazitiven Informationsträger, bei dem auf einem elektrisch nicht leitfähigen Substrat mindestens eine elektrisch leitfähige Schicht angeordnet ist und einen Flächensensor, wobei beide in Kontakt gebracht vorliegen. Weiterhin umfasst die Erfindung ein Verfahren zur Erfassung von Informationen bestehend aus einem kapazitiven Informationsträger, einem kapazitiven Flächensensor, einem Kontakt zwischen beiden Elementen und einer Wechselwirkung, welche eine, auf dem Informationsträger vorliegende Touch-Struktur für ein mit dem Flächensensor verbundenes Datenverarbeitungssystem auswertbar macht und mit dem Informationsträger assoziierte Ereignisse ausgelöst werden können.

Ein kapazitiver Flächensensor ist insbesondere eine physikalische Schnittstelle zur Erfassung von elektrischen Kapazitäten und/oder Kapazitätsunterschieden innerhalb von Teilbereichen einer definierten Fläche und ist auch als Touchscreen bekannt. Flächensensoren beinhaltende Geräte umfassen beispielsweise Smartphones, Handys, Displays, Tablet-PCs, Tablet-Notebooks, Touchpad-Geräte, Grafiktabletts, Fernseher, PDAs, MP3-Player, Trackpads und/oder kapazitive Eingabegeräte. Ein solcher Flächensensor kann beispielsweise auch Bestandteil von Eingabegeräten als Touchscreen, Touchpad oder Grafiktablett sein. Touchscreens sind auch als Tastschirm oder Sensorbildschirm bekannt. Derartige Eingabegeräte werden unter anderem in Smartphones, PDAs, Touchdisplays oder Notebooks eingesetzt.

Bekannte Lesegeräte oder Apparate zum Erfassen und Lesen von kapazitiven Informationen stellen einzelne Geräte dar, welche diese und nur genau diese Bestimmung haben. Nachteile der im Stand der Technik offenbarten Lesegeräte oder Apparate sind, dass für die einzelnen Anwendungen immer eigenständige kapazitive Lesegeräte verfügbar sein müssen und diese oft über eine Schnittstelle mit Daten verarbeitenden Medien verbunden sind. Die Verbreitung und Akzeptanz der Lesegeräte ist dadurch relativ schlecht und mit Mehrkosten durch die Anschaffung der Lesegeräte verbunden. Zudem ist die Verknüpfung real gedruckter Informationen mit digitalen Informationen sehr schlecht realisierbar. Eine Möglichkeit stellen Barcodes dar, welche mittels geeigneten Scannern oder Kameras erfasst werden und digitale Inhalte aufrufen können. Nachteilig bei den bekannten Barcodes ist, dass sie mit den systemtypischen Handicaps verbunden sind und z. B. Informationen beliebig oft kopierbar sind, optisch Platz auf Produkten oder Werbeträgern einnehmen, schlecht in ausreichend guter Qualität individualisierbar sind, es einer direkten Sichtverbindung zwischen Code und Erfassungseinheit bedarf, welche durch Schmutz, Kratzer, Lichtverhältnisse etc. eine korrekte Erfassung und Auslesung der Information erschweren oder komplett verhindern. Bisherige bekannte kapazitive Datenträger überbrücken innerhalb eines Lesegerätes immer zwischen (mindestens) einer Lese- und einer Empfangselektrode. Abhängig vom Vorhandensein oder Nichtvorhandensein einer kapazitiven Struktur wird eine logische "1" bzw. "0" erkannt.

Der Stand der Technik zeigt mehrere Möglichkeiten auf, mittels Drucktechniken oder anderen Beschichtungsverfahren Informationsträger herzustellen, welche mittels geeignetem Leseverfahren bzw. Lesegerät ausgelesen werden können. Die wohl am meisten verbreiteten derart hergestellten Informationsträger sind Barcodes in der Ausführung als eindimensionaler Strichcode oder beispielsweise als zweidimensionale Variante. Diese werden mit geeigneten optischen Scannern erfasst und gegebenenfalls über entsprechende Datenverarbeitungssysteme weiterverarbeitet.

Die Drucktechniken und Beschichtungstechniken zur Herstellung solcher Merkmale entwickeln sich ebenso weiter. So beschreibt die EP 1 803 562 ein Verfahren zum Transfer von bildgebenden Schichten von einer Trägerfolie bzw. Transferfolie auf Druckbogen in einer bogenverarbeitenden Maschine. Dabei wird in einem ersten Auftragswerk ein Kleber aufgebracht und in einem weiteren Beschichtungswerk mit einer Transferfolie zusammengefahren und Material von der Transferfolie durch Anhaftung auf die Druckbogen aufgebracht. Dabei wird in dem Beschichtungswerk ein Transferspalt gebildet und die Transferfolie an der Oberflache einer Presswalze entlang mit der mit Transfermaterial beschichteten Seite auf einem Druckbogen aufgelegt und unter Druck gemeinsam mit diesem durch den Transferspalt geführt, sodass die bildgebenden Schichten in mit Kleber versehenen Bereichen von der Trägerfolie auf den Druckbogen haftend übertragen werden. Damit können ohne weiteres Barcodes und alphanumerische Informationen aufgebracht werden.

Im Stand der Technik werden weiterhin in US 5,818,019, US 3,719,804, US 4,587,410 und US 2006/0118612 flächige gedruckte Materialien offenbart, die eine sichere Verifikation oder Validierung von Daten erlauben. Dies kann beispielsweise für Medikamente und ihre Verpackungen, aber auch für Lotterielose sinnvoll sein. Die aufgedruckten Informationen dienen z.B. zur Authentifizierung oder Gültigkeitsprüfung.

Auch kapazitiv auslesbare Informationsträger sind u. a. aus den Anmeldungen US 3,719,804 (permanenter Informationsspeicher) und US 4,587,410 (Parksystem) bekannt. Im letztgenannten Beispiel ist die Bearbeitung und Veränderbarkeit von kapazitiven Strukturen für ein Parkmeter dargestellt. Mittels mechanischer Einheit wird die kapazitive Struktur im Lesegerät sukzessive verändert und so ihr "innerer Wert" verändert. Eine Individualisierung der Strukturen ist nicht vorgesehen. Das komplette System ist ein autarkes System ohne Interaktion zu anderen Systemen oder einer Datenverarbeitung bzw. Datenspeicherung.

In US 3,719,804 sind die Herstellmöglichkeiten mittels Drucktechniken wie beispielsweise Siebdruck, Flexodruck und Tiefdruck aufgeführt. Die Beschreibung bezieht sich auf flüssig prozessierbare Materialien, welche sich für Druckprozesse eignen. Dies ist mit allen Problemen behaftet, die solche flüssig prozessierbaren Tinten mit sich bringen. Die Tinten, die dem genügen, sind sehr teuer, beinhalten Lösemittel, sind begrenzt haltbar und verursachen prozesstechnische Probleme. Die Individualisierung der aufgebrachten Leiterzüge erfolgt mittels Trenntechniken. Das Ausleseverfahren ist stark positionsabhängig und ist mit einer festen Ausleseposition des Informationsträgers im Lesegerät verbunden.

EP 2 088 532 A1 beschreibt einen flächigen Datenträger für die Zuordnung von Informationen, speziell Sammel-/Spielkarten, die Datenträger darstellen und einen durch ein Lesegerät auslesbaren eindeutigen und eineindeutigen Code aufweisen.

US 2006 097991 A1 beschreibt ein Touchpanel welches ein transparentes, kapazitives Medium aufweist und dazu ausgestaltet ist, mehrere Berührungen, welche zur selben Zeit an verschiedenen Orten stattfinden, auszuwerten und basierend darauf spezifische Signale zu generieren.

Anonymous: "mTouch Projected Capacitive Touch Screen Sensing Theory of Operation", 5. Januar 2010 (2010-01-05), Seiten 1-16, XP055173634, ISBN: 978-1-60-932466-7 beschreibt eine kapazitive Sensortechnologie welche ein Nutzer Interface bereitstellt. Gesten können mit der dargestellten Technologie erkannt werden.

DE 10 2005 042089 A1 beschreibt ein System zum Schreiben und Lesen von Informationen. Das entsprechende Datenspeichermedium ein Dielektrikum aufweist und die Information durch Vorhandensein, bzw. Nichtvorhandensein einer ersten Speicherelektrode im Datenspeichermedium gebildet wird. Die Informationen werden durch kapazitiv unter Verwendung einer Auswerteelektrode ausgelesen.

Zusammenfassend weisen die im Stand der Technik vorgeschlagenen Lösungen für Informationsträger mehrere Nachteile auf. Sie sind beispielsweise für die Massenanwendung nicht preiswert genug, können aufgrund ihres komplexen Aufbaus nur unvollkommen recycelt werden (RFID-Systeme), sind mitunter leicht kopierbar (Barcodes), erzeugen hohen Aufwand durch Anbringung auf das Endprodukt oder lassen sich nur schlecht oder gar nicht drucktechnisch weiterverarbeiten (Chipkarten).

Ausgehend von diesem Stand der Technik ist es die Aufgabe der vorliegenden Erfindung, ein System bereitzustellen, was nicht die Mängel oder Nachteile des Standes der Technik aufweist.

Ein Ereignis bezeichnet im Sinne der Erfindung insbesondere das, was eine Aktion und damit eine Zustandsveränderung, bevorzugt innerhalb von Anwendungen, auslöst. Diese Ereignisse können beispielsweise Benutzereingaben oder Systemereignisse sein. Die Ereignisse werden bevorzugt auf Geräten ausgelöst, welche selbst den Flächensensor tragen, beispielsweise Smartphones, Handys, Displays, Tablet-PCs, Tablet-Notebooks, Touchpad-Geräte, Grafiktabletts, Fernseher, MP3 Player, Trackpads und kapazitive Eingabegeräte, ohne darauf begrenzt zu sein.

Die Aufgabe wird durch die in den unabhängigen Ansprüchen aufgeführten Merkmale gelöst, wobei bevorzugte Ausführungsvarianten der Erfindung in den Unteransprüchen beschrieben sind.

Es war völlig überraschend, dass mit dem erfindungsgemäßen System sowie der Verwendung von Informationsträgern und -systemen und durch das erfindungsgemäße Verfahren zur Erfassung von Informationen die Nachteile des Standes der Technik überwunden werden konnten.

Gemäß einer bevorzugten Ausführungsform der Erfindung ist auf einem elektrisch nicht leitfähigen Substrat mindestens eine elektrisch leitfähige Schicht als Touch-Struktur angeordnet und umfasst mindestens einen Touch-Punkt, eine Koppelfläche und/oder eine Leiterbahn. Eine Koppelfläche ist im Sinne der Erfindung insbesondere ein elektrisch leitfähiger Bereich auf dem Substrat. Die Koppelfläche stellt eine bevorzugte Variante des erfindungsgemäßen Informationsträgers dar, welche es beispielsweise ermöglicht, elektrische Fremdkapazitäten, welche nicht Bestandteil der Touch-Struktur sind, anzukoppeln und damit die wirksame elektrische Kapazität der Touch-Struktur des Informationsträgers zu erhöhen. Dadurch können die Informationsträger besonders sicher und zuverlässig ausgelesen werden. Das kann sowohl durch Berührung oder Annäherung einer Person als auch Kopplung durch einen Gegenstand erfolgen.

Leiterbahnen bestehen bevorzugt aus einer elektrisch leitfähigen Schicht und stellen bevorzugt eine elektrische Verbindung zwischen zwei oder mehreren Teilbereichen her.

Vorteilhafterweise besteht das Substrat in einer bevorzugten Ausführungsform aus einem Kunststoff, einem Papier, einem Karton, einem Holzwerkstoff, einem Verbundwerkstoff, Glas, Keramik, Textilien, Leder oder einer Kombination davon. Das Substrat ist insbesondere ein elektrisch nicht leitfähiger Stoff, der vorzugsweise flexibel ist und ein geringes Gewicht aufweist. Es können lichtdurchlässige oder lichtundurchlässige Substrate verwendet werden. Bevorzugte Kunststoffe umfassen insbesondere PVC, PETG, PV, PETX, PE und synthetische Papiere.

Es ist bevorzugt, dass die elektrisch leitfähige Schicht eine Metallschicht, eine Metallpartikel enthaltene Schicht, eine elektrisch leitfähige Partikel enthaltene Schicht, elektrisch leitfähige Polymerschicht oder eine Schicht aus wenigstens einer Kombination dieser Schichten ist. Elektrisch leitfähige Partikel sind dabei insbesondere Ruß- oder Graphitpartikel. Polymere bezeichnen im Sinne der Erfindung insbesondere eine Substanz, die sich aus einem Kollektiv chemisch einheitlich aufgebauter, sich in der Regel aber hinsichtlich Polymerisationsgrad, Molmasse und Kettenlänge unterscheidender Makromoleküle (Polymermoleküle) zusammensetzt. Die Polymere sind vorzugsweise elektrisch leitfähig. Bei solchen polymereinheitlichen Stoffen sind alle Makromoleküle bevorzugt gleich aufgebaut und unterscheiden sich lediglich durch ihre Kettenlänge (Polymerisationsgrad). Man kann derartige Polymere als Polymerhomologe bezeichnen.

Polymere können aus der Gruppe umfassend anorganische Polymere, metallorganische Polymere voll- oder teilaromatische Polymere, Homopolymere, Copolymere, Biopolymere, chemisch modifizierte Polymere und/oder synthetische Polymere ausgewählt werden. Besonders bevorzugt sind Polymere ausgewählt aus Paraphenylen, Polyacetylen, Polypyrrol, Polythiophen, Polyanilin (PANI) und PE-DOT. Somit ist der Informationsträger kostengünstig mittels einem Massenherstellungsverfahren herstellbar.

Erfindungsgemäß ist eine Touch-Struktur insbesondere eine strukturiert aufgebrachte Schicht aus leitfähigem Material. Durch die erfindungsgemäße Verknüpfung dieser beiden Eigenschaften, elektrische Leitfähigkeit und Struktur, ist es überraschenderweise gelungen, eine gezielte Wechselwirkung der Touch-Struktur mit kapazitiv wirksamen Bereichen eines Flächensensors zu erreichen.

Da Touch-Punkt, Leiterbahn und Koppelfläche bevorzugt aus dem gleichen oder ähnlichen elektrisch leitfähigen Materialien bestehen können, kann ein Informationsträger vorzugsweise durch die Anwendung eines technologischen Verfahrens hergestellt werden. Dadurch sind die Informationsträger als Massenprodukt leicht und ökonomisch realisierbar.

Ein kapazitiver Flächensensor kann im Sinne der Erfindung insbesondere als ein Touchscreen bezeichnet werden.

Im Stand der Technik umfasst ein solcher Touchscreen insbesondere einen aktiven Schaltkreis, den Touch-Controller, welcher mit einer Struktur von Elektroden verbunden ist. Diese Elektroden sind in der Regel aufgeteilt in Sende- und Empfangselektroden. Der Touch-Controller steuert die Elektroden vorzugsweise so an, dass zwischen jeweils einer oder mehreren Sendeelektroden und einer oder mehreren Empfangselektroden ein Signal übertragen wird. Im Ruhezustand des Touchscreens bleibt das Signal konstant. Der im Stand der Technik beschriebene Zweck eines Touchscreens ist insbesondere das Detektieren von Fingern und deren Position auf der Oberfläche des Touchscreens. Hierzu bewirkt das Einbringen eines Fingers, dass das Signal zwischen den Elektroden verändert wird. In der Regel wird das Signal vermindert, weil der eingebrachte Finger einen Teil des Signals von der Sendeelektrode aufnimmt und so ein geringeres Signal an der Empfangselektrode ankommt.

Eine vorteilhafte Eigenschaft der Touch-Struktur ist deren Leitfähigkeit. Wird anstelle eines Fingers ein bevorzugter Informationsträger mit der Touch-Struktur mit einem Flächensensor in Kontakt gebracht, so bewirken die leitfähigen Bereiche bevorzugt denselben Effekt wie ein Finger. Allerdings ist die leitfähige Struktur bereichsweise strukturiert, da einerseits an bestimmten Stellen, insbesondere den Touch-Punkten der Effekt, welcher mit dem Einbringen eines Fingers vergleichbar ist, maximiert werden soll, um für den Touch-Controller bestmöglich erkennbar zu sein. Damit wird die Touch-Struktur vorteilhafterweise für ein mit dem Flächensensor verbundenen Datenverarbeitungssystem auswertbar.

In einer weiteren bevorzugten Ausführungsform ist auf einem elektrisch nicht leitfähigen Substrat mindestens eine elektrisch leitfähige, die Anordnung und/oder Eigenschaften von Fingerkuppen nachbildende, Touch-Struktur angeordnet. Die Touch-Struktur umfasst mindestens einen Touch-Punkt, eine Leiterbahn und/oder eine Koppelfläche. Es ist bevorzugt, dass die Kombination von wenigstens einem oder mehreren Touch-Punkten in einer Touch-Struktur die Anordnung und/oder Eigenschaften von Fingerkuppen nachbildet. Im Sinne der Erfindung kann mit der Touch-Struktur, bevorzugt mindestens einer Koppelfläche, besonders bevorzugt mindestens einer Leiterbahn und ganz besonders bevorzugt mindestens einem Touch-Punkt, ähnlich wie mit einem Finger, eine Eingabe auf einem Flächensensor ausgeführt werden. Aus diesem Grund kann die bevorzugte Ausführungsform der Erfindung dadurch beschrieben werden, dass die Touch-Struktur die Eigenschaften von Fingerkuppen nachbilden, wobei hiermit vorzugsweise die Eigenschaft der Touch-Struktur bezeichnet ist, dass diese ebenso wie ein Finger eine Eingabe auf einem Flächensensor vornehmen kann. Diese zusätzliche Eigenschaft der Touch-Struktur, die Anordnung und/oder Eigenschaften von Fingerkuppen nachzubilden, ist dabei besonders vorteilhaft, weil eine solche Struktur für ein mit dem Flächensensor verbundenes Datenverarbeitungssystem einfach auswertbar und besser softwaretechnisch zu verarbeiten ist.

Dabei bildet ein Touch-Punkt, durch eine Strukturierung des leitfähigen Bereichs auf dem Informationsträger, in geeigneter Weise die Eigenschaften von Fingerkuppen nach. Einem Fachmann ist bekannt, dass auf einem Touchscreen oder einem Flächensensor eine Eingabe mittels einem oder mehrerer Finger vorgenommen werden kann (Single- oder Multi-Touch). Die Technologie der Flächensensoren und die Prinzipien der Eingabe, bzw. durch welche Eigenschaften eines Fingers eine Eingabe erfolgt, sind dem Fachmann ebenfalls bekannt. Beispielsweise können neben den elektrischen Eigenschaften des Fingers (z. B. Leitfähigkeit) auch Dichte, Druck der Eingabe oder Entfernung zum Flächensensor die Eingabe beeinflussen. Das bevorzugte System erreicht durch die Strukturierung des leitfähigen Bereichs die gleiche Wirkung auf einem Flächensensor wie ein Finger, nämlich eine Eingabe an einer, durch die leitfähigen Bereiche des Informationsträgers definierten Position auf dem Flächensensor. Der Fachmann könnte somit ohne großen experimentellen Aufwand die Touch-Struktur des Informationsträgers derart ausführen, dass die Eigenschaften von Fingern, bzw. Fingerkuppen nachgebildet werden und mit den elektrisch leitfähigen Flächen des Informationsträgers eine Eingabe auf einem Flächensensor erzielt werden kann.

In einem Beispiel, ohne darauf beschränkt zu sein, von einem bevorzugten Informationsträger in Wechselwirkung mit einem sogenannten Touchscreen mit einer Elektrodenanordnung in Form eines Gitters, ist beispielsweise eine

geeignete Strukturierung des Touch-Punktes ein Kreis mit einem Durchmesser von 1 bis 20 mm, bevorzugt 4 bis 15 mm und besonders bevorzugt 6 bis 10 mm. Da ein Touchscreen geeignet ist, um die Position von Fingerkuppen zu bestimmen, ist ein Touch-Punkt eines Informationsträgers ebenfalls in gleicher Weise vom Touchscreen bestimmbar. Der Touchscreen oder Flächensensor kann vorteilhafterweise nicht unterscheiden, ob die Eingabe durch die Touch-Struktur eines Informationsträgers oder durch einen Finger erfolgte.

Es kann bevorzugt sein, auf dem bevorzugten Informationsträger mehrere Touch-Strukturen aufzubringen. Vorteilhafterweise können Form, Orientierung, Anzahl, Ausrichtung, Abstand und/oder Position von Teilbereichen, bevorzugt den Touch-Punkten der Touch-Struktur zur Speicherung einer Information genutzt werden.

In einer bevorzugten Ausführungsform der Erfindung kann es vorgesehen sein, dass auf dem Substrat eine Touch-Struktur mit mindestens einer Koppelfläche angeordnet ist, welche vorzugsweise mit mindestens einem Touch-Punkt über mindestens eine Leiterbahn verbunden ist und/oder Teil des Touch-Punkts eine Koppelfläche ist.

In einer weiteren bevorzugten Ausführungsform ist das elektrisch leitfähige Material eine gedruckte Schicht auf dem Substrat. Die Schicht ist damit mit einem Additivverfahren leicht und ökonomisch günstig realisierbar. Es ist jedoch auch bevorzugt, dass die elektrisch leitfähige Schicht mittels eines Transferverfahrens auf das Substrat übertragen wird. Erfindungsgemäß kann das Aufbringen der Schicht auf dem Substrat durch an sich bekannte Transferverfahren erfolgen; bevorzugt handelt es sich hierbei um das Transferfolienverfahren und besonders bevorzugt um ein Kaltfolientransferverfahren. Dem Fachmann sind derartige Verfahren bekannt. Selbstverständlich können auch alle anderen Verfahren zur strukturierten Aufbringung einer elektrisch leitfähigen Schicht verwendet werden.

Die elektrisch leitfähige Schicht ist nach einer weiteren bevorzugten Ausführungsform durch Anwendung eines Subtraktivverfahrens realisiert, wobei Schichtbereiche abgetragen sind. Dabei kommen bekannte Ätz- oder Laserabtragverfahren zum Einsatz. Bei letzteren wird das abzutragende Material durch das Wirken der Laserstrahlen verdampft. Selbstverständlich können auch weitere Verfahren eingesetzt werden.

Vorteilhafterweise befindet sich gemäß einer weiteren bevorzugten Ausführungsform wenigstens eine das Substrat des Informationsträgers ganz oder teilweise überdeckende Deckschicht auf dem Informationsträger. Die Deckschicht kann vorteilhafterweise als Schutz oder Unkenntlichmachung der Touch-Struktur des Informationsträgers verwendet werden. In einer bevorzugten Variante kann diese Deckschicht auch als Deckplatte ausgeführt sein. Die Deckplatte kann aus starren oder flexiblen Materialien bestehen.

Es war völlig überraschend, dass der Informationsträger oder eine Gruppe von Informationsträgern und/oder das erfindungsgemäße System in zahlreichen Bereichen des Wirtschaftslebens verwendet werden können. Diese umfassen beispielsweise Spielkarten, Sammelkarten, Briefmarken, Frankierung, Porto, Warenlogistik, Warenverfolgung, Einlass, Eintrittskarten, Zugang zu geschlossen Bereichen, virtuellen Inhalten, Marketinganwendungen, Kundenbindung, Lotterie- und Gewinnspiele, Mitgliederausweise, Zeitkarten, Bezahlanwendungen, Echtheits-Zertifikate, Zertifikate, Fälschungssicherungen, Kopierschutze, Signaturen, Lieferscheine, Kontoauszüge, Beipackzettel, Gegenstände innerhalb von Computerspielen, Music/Video/E-Books-Downloads, Bonusmarken/-programme, Gerätesteuerungen oder Geschenkkarten, ohne darauf begrenzt zu sein.

Es kann auch bevorzugt sein, dass der Informationsträger mit einem Gegenstand verbunden ist oder der Gegenstand selbst als Substrat dient. Als Gegenstand wird im Sinne der Erfindung insbesondere ein Ding, eine Sache oder ein Objekt bezeichnet. Ein Gegenstand ist bevorzugt ausgewählt aus der Gruppe umfassend eine Verpackung, Geschirr, Druckerzeugnisse, Kleidung, Möbel, Dokumente, Spielzeug, Konsumartikel, Lebensmittel, Halbzeuge, Maschinenteile, Baustoffe, Ein- und Mehrwegbehältnisse und/oder elektrische Geräte. Prinzipiell können auch nicht flächig ausgebildete Gegenstände direkter Träger eines Informationsträgers sein (Gegenstand übernimmt Substratfunktion) oder auch indirekt, indem der Informationsträger an dem Gegenstand angebracht oder aufgebracht sein kann. Die An- oder Aufbringung kann beispielsweise selbstklebend oder mittels anderer bekannter Verbindungstechnologien oder Hilfsstoffe erfolgen, beispielsweise ein Label an Textilien.

Vorteilhafterweise ist mindestens ein Informationsträger mit mindestens einem Flächensensor mindestens bereichsweise in Kontakt. Dazu befindet sich auf einem Substrat mindestens eine bereichsweise aufgebrachte elektrisch leitfähige Schicht, wobei wenigstens ein Bereich der elektrisch leitfähigen Schicht ein Teilbereich ist. Der oder die Teilbereich(e) werden im Sinne der Erfindung auch als Touch-Struktur bezeichnet. Die Form, Orientierung, Anzahl, Ausrichtung, Abstand und/oder Position der Touch-Struktur, bevorzugt der Koppelfläche, besonders bevorzugt der Leiterbahnen und ganz besonders bevorzugt der Touch-Punkte oder deren Teilbereiche bilden bevorzugt die Information, sodass bei mindestens bereichsweiser Positionierung des Informationsträgers an dem Flächensensor oder über eine relative Bewegung wenigstens eines Bereiches des Informationsträgers gegenüber dem Flächensensor wenigstens ein Ereignis ausgelöst wird. Eine bereichsweise Positionierung des Informationsträgers auf dem Flächensensor bedeutet im Sinne der Erfindung, dass insbesondere mindestens ein Bereich des Informationsträgers mit mindestens einem Bereich des Flächensensors in Kontakt steht.

Der Informationsträger wird bevorzugt derart mit dem Flächensensor in Kontakt gebracht, dass durch den Flächensensor mindestens ein Ereignis ausgelöst wird.

Im Sinne der Erfindung bedeutet in Kontakt bringen, dass insbesondere zwischen dem Informationsträger und dem Flächensensor bevorzugt kein Freiraum besteht. Das heißt, der Informationsträger ist bevorzugt mit dem Flächensensor in Berührungskontakt. Es kann jedoch auch bevorzugt sein, dass zwischen dem Informationsträger und dem Flächensensor kein direkter Kontakt besteht, sondern bereits eine Annäherung ausreicht, um ein Ereignis auszulösen. Bei einer Annäherung besteht zwischen Informationsträger und Flächensensor ein bevorzugter Abstand von größer 0 cm bis 2 cm.

In einer weiteren bevorzugten Ausführungsform umfasst das System mindestens einen kapazitiven Informationsträger und mindestens einen kapazitiven Flächensensor, wobei zwischen dem Informationsträger und dem Flächensensor ein Kontakt oder eine Annäherung erfolgt und hierdurch eine kapazitive Wechselwirkung erreicht wird. Durch die kapazitive Wechselwirkung wird die Touch-Struktur des Informationsträgers für ein mit dem Flächensensor verbundenes Datenverarbeitungssystem auswertbar und kann dadurch mit dem Informationsträger assoziierte Ereignisse auslösen.

Durch diese kapazitive Wechselwirkung kann bevorzugt ein Ereignis auf dem den Flächensensor tragenden Gerät ausgelöst werden. Das Ereignis löst wiederum Aktionen aus, wie beispielsweise die Aktivierung und/oder das Beenden einer Anwendung, das Verändern von numerischen Werten und/oder Texten, das Manipulieren von Grafiken, das Verändern von Datenbeständen oder das Erlangen von Zugriff auf informationstechnische Dienste, ohne darauf beschränkt zu sein. Mithin betrifft die Erfindung auch die Verwendung des Informationsträgers umfassend eine Touch-Struktur zur kapazitiven Wechselwirkung mit einem Flächensensor.

Bevorzugt ist, dass der Flächensensor mindestens ein kapazitives Display umfasst und das den Flächensensor beinhaltende Gerät ausgewählt ist aus der Gruppe umfassend Smartphones, Handys, Displays, Tablet-PCs, Tablet-Notebooks, Tochpad-Geräte, Grafiktabletts, Fernseher, PDAs, MP3-Player, Trackpads und/oder und kapazitive Eingabegeräte, ohne darauf begrenzt zu sein. Ein kapazitiver Flächensensor kann beispielsweise auch Bestandteil von Eingabegeräten als Touchscreen, Touchpad oder Grafiktablett sein. Touchscreens sind auch als Tastschirm oder Sensorbildschirm bekannt. Derartige Eingabegeräte werden unter anderem in Smartphones, PDAs, Touchdisplays oder Notebooks eingesetzt. Ein Flächensensor muss sich dabei nicht zwingend vor einem Display befinden. Beispielsweise kann dieser auch als Tastatur ausgebildet sein und eingesetzt werden. Neben einer Klickfunktion ist auch eine Drag-and-Drop-Operation ausführbar. Weiterhin können mehrere gleichzeitige Berührungen in Form eines sogenannten "Multi-Touch" dazu verwendet werden, um zum Beispiel angezeigte Elemente insbesondere zu drehen oder zu skalieren. Der Flächensensor ist dabei bevorzugt als sogenannte Projected-Capacitive-Touch-Technik (PCT) ausgeführt. Varianten der PCT-Technik sind beispielsweise "Mutual Capacitance" und "Self Capacitance", welche ausgeführt sein können als Mutual-Capacitance-Screen und Self-Capacitance-Screen.

Die erfindungsgemäßen Informationsträger zeichnen sich vorteilhafterweise dadurch aus, dass damit eine Verbindung zu einem Gerät mit Flächensensor realisierbar ist. Der Flächensensor wirkt dabei bevorzugt analog einem kapazitiven Lesegerät, allerdings ohne hardwareseitig auf fest vorgegebene Leiterbahnen oder Lese-Elektroden angewiesen zu sein, wie sie derzeit limitierend aus dem Stand der Technik bekannt sind (US 3,719,804 - Permanenter Informationsspeicher). Durch die erfindungsgemäßen Informationsträger eröffnet sich eine Erweiterung des Funktionsumfangs von kapazitive Flächensensoren beinhaltenden Geräten. Dadurch werden beispielsweise Informationen leichter zugänglich und/oder die Benutzung der Geräte vereinfacht (vor allem für körperlich eingeschränkte, behinderte oder ältere Menschen) und/oder neuartige Anwendungen ermöglicht, ohne darauf begrenzt zu sein.

Auf dem Informationsträger sind bevorzugt Informationen in Form der Touch-Struktur, die als Teilbereich ausgebildet sein kann, gespeichert. Die Informationen sind bei in Kontakt bringen oder Annäherung des Informationsträgers zum Flächensensor über diesen lesbar, wobei die Kapazität insbesondere partiell geändert wird.

Die die Information bildende Touch-Struktur, d. h. die Teilbereiche eines Bereichs, bestehen aus einem elektrisch leitfähigen Material. Der Fachmann erkennt gemäß der Offenbarung der vorliegenden Erfindung, dass die Touch-Struktur aus Eckpunkten und/oder durch Kurven definierte Füllflächen besteht, beispielsweise Rechtecken, Kreisen oder ähnlichen Figuren. Die Ortsbeziehungen der Teilbereiche zueinander (Orientierung, Anzahl, Ausrichtung, Abstand und/oder Position) und/oder die Form der Teilbereiche stellen bevorzugt die Information dar. Bei der Positionierung des Informationsträgers an dem Flächensensor wird die Touch-Struktur, bevorzugt die Leiterbahnen, besonders bevorzugt die Koppelfläche und ganz besonders bevorzugt die Touch-Punkte beispielsweise als Finger-Eingabe interpretiert, sodass aus den Teilbereichen der Touch-Struktur, insbesondere den Touch-Punkten, die codierte Information bestimmbar ist, beispielsweise in Form einer binär codierten Zahl, ohne darauf beschränkt zu sein. Darüber hinaus ist ein Informationsträger insbesondere bestimmbar, indem die durch den Flächensensor bestimmte Wechselwirkung zwischen Informationsträger und Flächensensor, die durch die Touch-Struktur des Informationsträgers gegebene Geometrie selbst einen Code in einem Codierungssystem darstellt. Das Positionieren kann dabei auch durch eine Relativbewegung des Informationsträgers zum Flächensensor erfolgen. Es ist bevorzugt, dass der Flächensensor in einer Bewegung relativ zum Informationsträger fortschreitend vollständig oder teilweise Informationen von dem Informationsträger erhält. Dabei können auch in Abhängigkeit der Positionen des Informationsträgers gegenüber dem Flächensensor verschiedene Ereignisse erzeugt werden. Ausschlaggebend dazu ist beispielsweise die Bewegungsrichtung oder Verweildauer des Informationsträgers gegenüber dem Flächensensor.

Der Informationsträgers kann vorteilhafterweise als einfacher, signierter oder verschlüsselter Informationsträgers ausgestaltet sein. Damit eignet sich der Informationsträger vorteilhafterweise als Schlüssel zur berechtigten Nutzung bestimmter Datenmengen oder Hardware, wobei die Kommunikation über ein bekanntes Datennetz wie zum Beispiel das Internet erfolgen kann. Das kann auch über ein Gerät erfolgen, welches über den Flächensensor verfügt.

Eine Aktion ist nachfolgend zusammenfassend das, was bevorzugt durch ein Ereignis ausgelöst wird.

Im Zusammenhang mit einem Flächensensor beinhaltenden Gerät ist der Informationsträger insbesondere:

- ein einfacher Informationsträger, um Aktionen in dem Programmablauf auf dem Gerät selbst auszulösen,
- ein signierter Informationsträger, um Aktionen in dem Programmablauf des Gerätes und/oder einem externen Datenverarbeitungssystem, welches über ein Datennetz verbunden sein kann, auszulösen,
- ein verschlüsselter Informationsträger, welcher von dem Programmablauf des Gerätes und/oder eines externen Datenverarbeitungssystems entschlüsselt wird und Aktionen im Programmablauf des Gerätes oder des externen Datenverarbeitungssystems auslöst.

Auf dem Substrat befinden sich gemäß einer weiteren bevorzugten Ausführungsform mindestens zwei Touch-Strukturen mit jeweils mindestens einer assoziierten Koppelfläche. Mit dieser Anordnung können mindestens zwei Ereignisse ausgelöst werden, indem der Nutzer beispielsweise die jeweils assoziierte Koppelfläche berührt. Dadurch können beispielsweise ja/nein-Entscheidungen vom Nutzer über den Informationsträger ausgelöst werden.

Vorteilhafterweise können mehrere Informationsträger in Kombination, insbesondere nebeneinander und/oder übereinander und/oder zeitlich nacheinander, gelesen werden. Hierdurch ist es überraschenderweise möglich, komplexe Informationen auf einem Informationsträger, wobei der Informationsträger beispielsweise auf Karton und/oder Papier aufgedruckt ist, zu speichern. Der Informationsträger verbindet überraschenderweise Printmedien mit digitalen Medien, was derart zuvor nicht möglich war.

Es ist weiterhin bevorzugt, dass der Informationsträger einem Datensatz in einem Datenverarbeitungssystem zugeordnet ist und der Datensatz konstant bleibt oder sich verändert. Dies kann beispielsweise durch Verwendung des Informationsträgers und/oder durch Zeit passieren, ohne darauf begrenzt zu sein.

Vorteilhafterweise kann der Informationsträger derart verwendet werden, dass der Informationsträger in Verbindung mit einem Flächensensor über die Touch-Struktur einer Aktion eines Datenverarbeitungssystems zugeordnet werden kann oder diese auslöst. Diese Aktion trifft insbesondere auf nicht-vernetzte Datenverarbeitungssysteme und besonders bevorzugt auf vernetzte Datenverarbeitungssysteme zu.

Die Erfindung betrifft auch ein Verfahren zur Erfassung von Informationen.

Hierbei wird mindestens ein kapazitiver Flächensensor und mindestens ein kapazitiver Informationsträger bereitgestellt, wobei der Informationsträger ein elektrisch nicht leitfähiges Substrat aufweist, welches mindestens eine elektrisch leitfähige Touch-Struktur umfasst. Der mindestens eine Informationsträger wird mit dem mindestens einen Flächensensor in Kontakt gebracht, wobei der Kontakt statisch und/oder dynamisch sein kann. Dabei beschreibt ein statischer Kontakt, dass insbesondere im Moment der Auswertung des Informationsträgers keine oder eine unwesentliche Relativbewegung zum Flächensensor stattfindet. Im Gegensatz dazu beschreibt ein dynamischer Kontakt, dass insbesondere eine Relativbewegung während der Auswertung des Informationsträgers stattfinden kann. Der Kontakt kann erfindungsgemäß auch eine Annäherung umfassen. Durch den Kontakt wird eine kapazitive Wechselwirkung ausgelöst, wobei durch die kapazitive Wechselwirkung Informationen von dem Informationsträger auf den Flächensensor übertragen werden.

Im Folgenden soll die Erfindung anhand eines Beispiels erläutert werden, ohne jedoch hierauf beschränkt zu sein. Im Nachfolgenden wird beispielhaft dargestellt, wie Informationen mittels Touchstruktur (in dem Fall durch die Touch-Punkte der Touchstruktur) auf einem Informationsträger codiert werden können. Daran soll beispielhaft die quantitative Ausprägung der Erfindung dargestellt werden.

Der Bereich der elektrisch leitfähigen Schicht - der Touch-Struktur - besteht bevorzugt aus Teilbereichen. Insbesondere die Form, Orientierung, Anzahl, Ausrichtung, Abstand und/oder Position der Teilbereiche bilden die Informationen des Informationsträgers, sodass bei in Kontakt bringen des Informationsträgers mit dem Flächensensor ein Ereignis ausgelöst wird. Dabei kann der Programmablauf eines Gerätes mit dem Flächensensor gesteuert werden. Die Teilbereiche, d. h. die Touch-Struktur bestehen bevorzugt aus Eckpunkten und/oder durch Kurven definierte Füllflächen, beispielsweise Rechtecke, Kreise oder ähnliche Figuren.

Die Teilbereiche können beispielsweise 8 mm große Kreise sein. Damit sind sie virtuell auf einem Flächensensor von 50 mm Breite und 75 mm Höhe bei 163 ppi (pixel per inch) Auflösung rund 50x50 Pixel groß. Die Teilbereiche einer Größe von 8 mm können 54-mal auf dem Flächensensor in einer Anordnung von 6 x 9 aufgeteilt werden. Damit ergibt sich folgendes:
Die Position der Teilbereiche ist bis auf die Hälfte ihres Durchmessers bestimmbar, die Anzahl der möglichen Positionen verdoppelt sich dadurch pro Achse, jeweils eine Position am Rand entfällt jedoch. Damit sind (6*2 - 1) x (9*2 - 1), also 11 x 17 Positionen unterscheidbar.

Eine belegte Position sperrt im Extremfall neun mögliche benachbarte Positionen. Bei fünf benutzten Positionen fallen von den 17 x 11 = 187 möglichen Positionen also 5 x 9 = 45 Positionen weg. Damit bleiben 142 freie Positionen. Die freien Positionen als Teilbereiche unterliegen dem Binomialkoeffizienten.

Also ergibt die Formel $\binom{142}{5}$ die möglichen Anordnungen der Teilbereiche. In diesem Fall sind 448072338 verschiedene Anordnungen von Teilbereichen möglich. Diese Zahl kann als Binärzahl mit 29 Stellen dargestellt werden. Daraus ergeben sich mindestens $2^{28}$ mögliche Anordnungen und es können 28 Bit an Daten dargestellt werden. Für die Anzahl an Teilbereichen von 5 bis 18 ergibt sich folgende Tabelle:

| | | | | | | | |
|---|---|---|---|---|---|---|---|
| 5 | * | 9 | = | 45 | 142 | über 5 | $< 2^{29}$ |
| 6 | * | 9 | = | 54 | 133 | über 6 | $< 2^{33}$ |
| 7 | * | 9 | = | 63 | 124 | über 7 | $< 2^{37}$ |
| 8 | * | 9 | = | 72 | 115 | über 8 | $< 2^{40}$ |
| 9 | * | 9 | = | 81 | 106 | über 9 | $< 2^{42}$ |
| 10 | * | 9 | = | 90 | 97 | über 10 | $< 2^{44}$ |
| 11 | * | 9 | = | 99 | 88 | über 11 | $< 2^{45}$ |
| 12 | * | 9 | = | 108 | 79 | über 12 | $< 2^{46}$ |
| 13 | * | 9 | = | 117 | 70 | über 13 | $< 2^{46}$ |
| 14 | * | 9 | = | 126 | 61 | über 14 | $< 2^{45}$ |
| 15 | * | 9 | = | 135 | 52 | über 15 | $< 2^{43}$ |
| 16 | * | 9 | = | 144 | 43 | über 16 | $< 2^{38}$ |
| 17 | * | 9 | = | 153 | 34 | über 17 | $< 2^{32}$ |
| 18 | * | 9 | = | 162 | 25 | über 18 | $< 2^{19}$ |

Demnach ergibt sich mit zwölf Teilbereichen ein Maximum von 45 Bit Daten, welche nach diesem Beispiel darstellbar sind. Daraus ergibt sich:

- bei maximal fünf Teilbereichen sind bis maximal 28 Bit auf einem Informationsträger unterzubringen und
- bei zwölf Teilbereichen sind bis maximal 45 Bit auf einem Informationsträger unterzubringen.

Die Datenmenge ist durch Verkleinerung der Teilbereiche wesentlich vergrößerbar. Für Teilbereiche mit einer Größe von 4 mm ergibt sich folgendes:

- bei fünf unterscheidbaren Positionen sind theoretisch bis zu 40 Bit Daten möglich,
- bei zwölf unterscheidbaren Positionen sind theoretisch bis zu 84 Bit Daten möglich und
- bei **zwanzig** unterscheidbaren Positionen sind theoretisch bis zu 124 Bit Daten möglich.

Die Erfindung wird nunmehr anhand von Figuren beispielhaft beschrieben, ohne jedoch auf diese beschränkt zu sein; es zeigt:

| | |
|---|---|
| Fig. 1 bis Fig. 4 | Draufsichten von bevorzugten Ausgestaltungen eines Informationsträgers |
| Fig. 5a und Fig. 5b | Informationsträger in einer Schnittdarstellung |
| Fig. 6 und Fig. 7 | informationsträger mit Leiterbahnen |
| Fig. 8 bis Fig. 11 | Informationsträger mit Leiterbahnen und Koppelfläche(n) |
| Fig. 12a und Fig. 12b | Informationsträger mit einer Deckschicht in einer Schnittdarstellung |
| Fig. 13 und Fig. 14 | Informationsträger an einem Gegenstand |

Fig. 15 bis Fig. 20 Interaktion eines oder mehrerer Informationsträger mit einem Flächensensor

Fig. 21 bis Fig. 25 Beispielhafte Anwendungen eines Informationsträgers

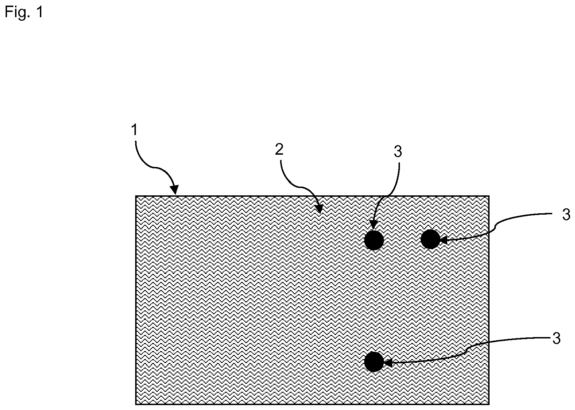

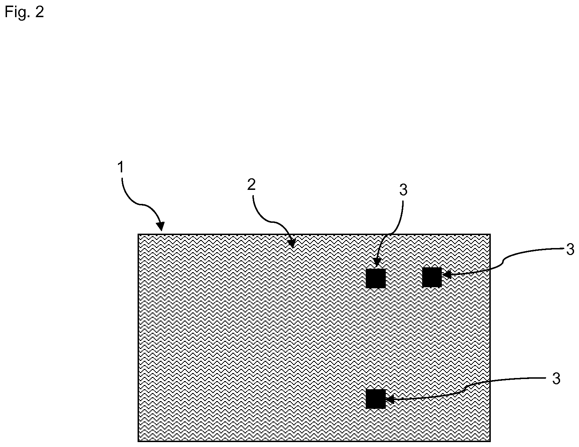

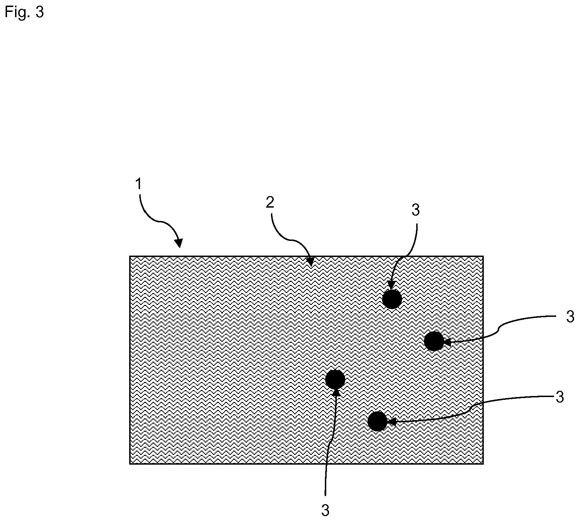

Fig. 1 bis Fig. 4 zeigen Draufsichten von bevorzugten Ausgestaltungen eines Informationsträgers 1. Ein Informationsträger 1 besteht bevorzugt aus einem Substrat 2 mit mindestens einer bereichsweise aufgebrachten und elektrisch leitfähigen Schicht, wobei die Schicht die Touch-Struktur ist. Die Touch-Struktur umfasst mindestens eine Leiterbahn 4, eine Koppelfläche 5 und/oder einen Touch-Punkt 3. In Fig. 1 ist beispielhaft ein Touch-Punkt 3 dargestellt. Das Substrat 2 ist ein Träger und besteht bevorzugt aus einem Kunststoff, einem Papier, einem Karton, einem Holzwerkstoff, einem Verbundwerkstoff, Glas, Keramik, Textilien, Leder oder einer Kombination davon. Auf dem Substrat 2 sind bereichsweise die elektrisch leitfähigen Touch-Punkte 3 aufgebracht.

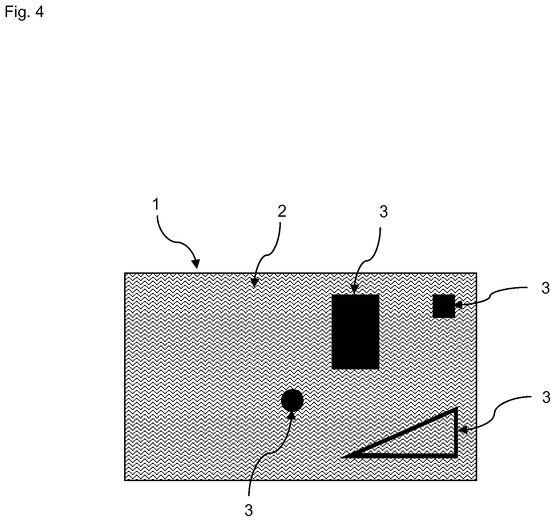

Die Touch-Punkte 3 können beispielsweise in Form von Kreisen und/oder Rechtecken auf das Substrat 2 aufgetragen sein. Vorteilhafterweise kann ein Touch-Punkt 3 auch mit unterschiedlichen geometrischen Figuren (Fig. 1, 2, 3) dargestellt werden, wobei diese auch miteinander kombinierbar sind (Fig. 4).

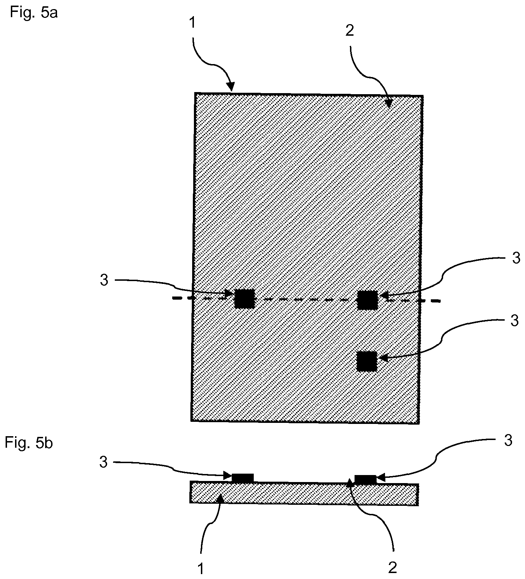

Fig. 5a und Fig. 5b zeigen einen Informationsträger 1 in einer prinzipiellen Schnittdarstellung. Die Erhebung der Touch-Punkte 3 in Fig. 5b dient zur besseren Veranschaulichung. Je nach Herstellungsverfahren für die Touch-Struktur können Leiterbahn 4, Koppelfläche 5 oder Touch-Punkt 3 erhaben (bspw. Siebdruck), oberflächengleich (bspw. Offsetdruck) oder sogar vertieft (bspw. Heißprägen) zum umliegenden Substrat 2 sein.

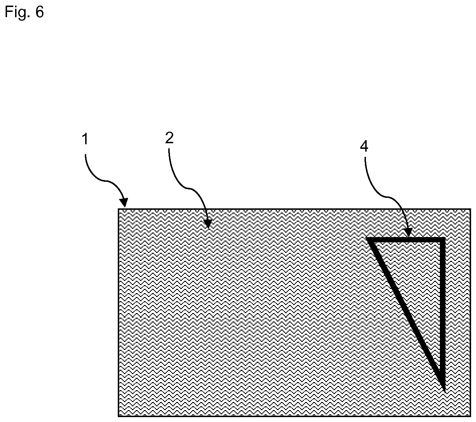

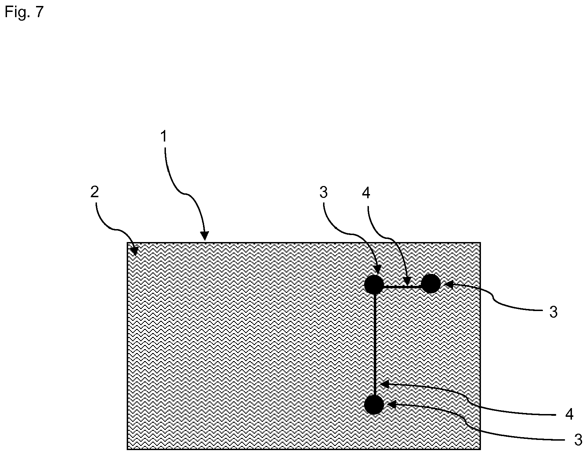

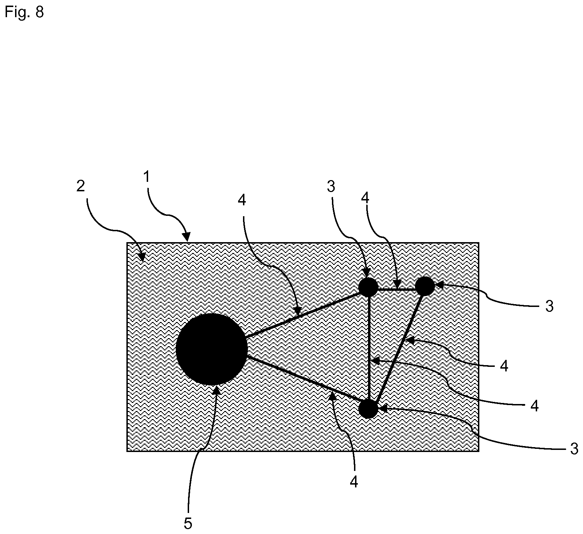

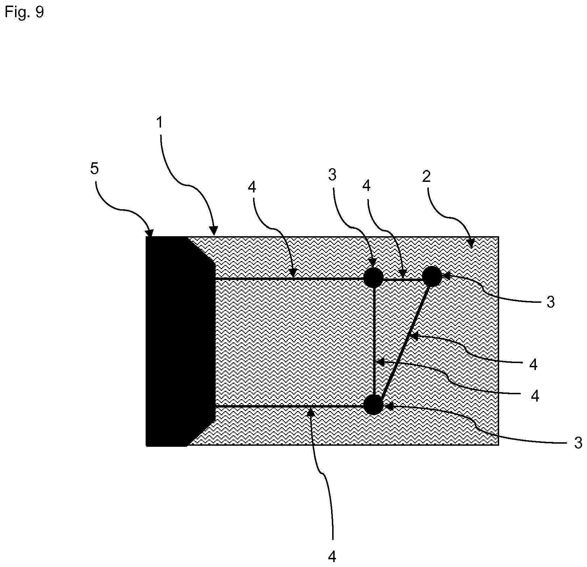

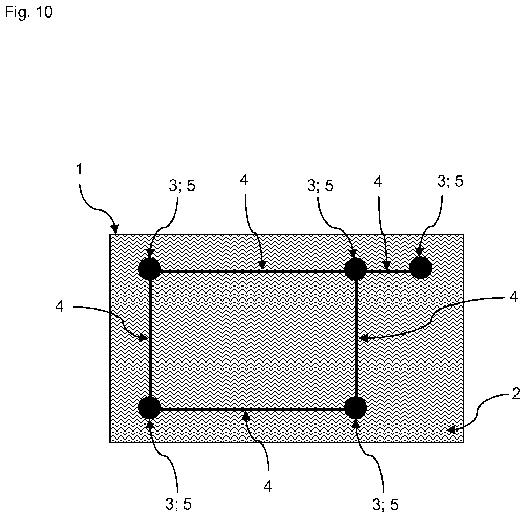

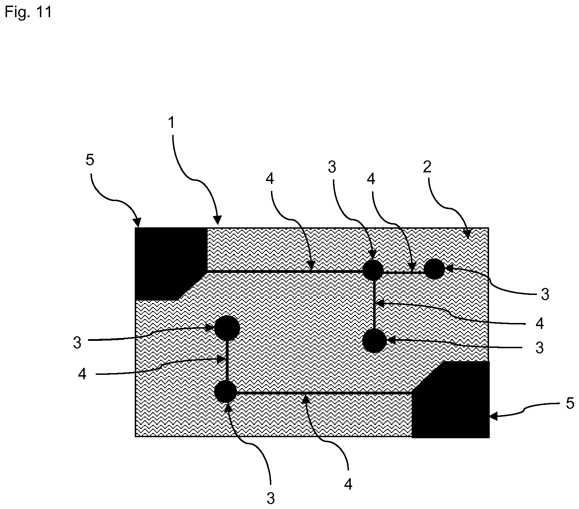

Fig. 6 und Fig. 7 zeigen Informationsträger 1 mit Leiterbahnen 4. Die Teilbereiche der Touch-Punkte 3 können vorteilhafterweise kleiner, gleich (Fig. 6) oder größer (Fig. 7) als die Leiterbahnen 4 sein. In weiteren Ausführungsformen (Fig. 8, 9, 10,11) befindet sich wenigstens ein weiterer Teilbereich der elektrisch leitfähigen Schicht (der Touch-Struktur) als Koppelfläche 5 auf dem Substrat 2. Die einzelnen Teilbereiche der Touch-Punkte 3 sind bevorzugt über Leiterbahnen 4 miteinander elektrisch leitend verbunden. Vorteilhafterweise sind die Touch-Punkte 3 und die Leiterbahnen 4 aus der elektrisch leitfähigen Schicht ausgebildet. Es kann jedoch auch vorteilhaft sein, dass die elektrisch leitfähigen Schichten aus einem unterschiedlichen Material gefertigt sind. Dies kann insbesondere dann bevorzugt sein, wenn die elektrisch leitfähigen Schichten eine unterschiedliche elektrische Leitfähigkeit aufweisen sollen.

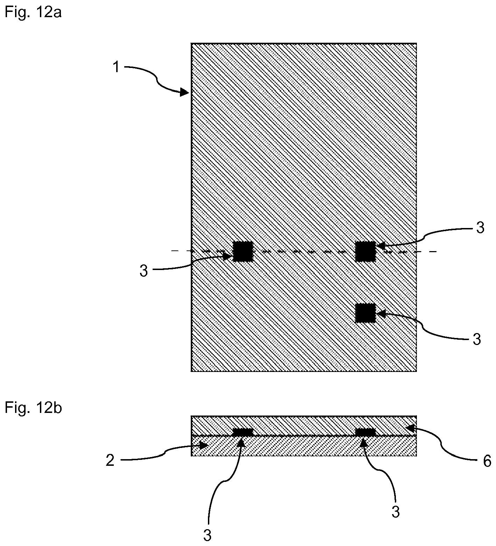

Fig. 12a und Fig. 12b zeigen einen Informationsträger 1 mit einer Deckschicht 6 in einer prinzipiellen Schnittdarstellung. Auf dem Substrat 2 und der elektrisch leitfähigen Touch-Struktur befindet sich wenigstens eine Deckschicht 6, sodass ein kompakter Informationsträger 1 vorliegt und die Touch-Struktur (z. B. die Touch-Punkte 3) nicht beschädigt wird oder von außen einsehbar ist. Die Deckschicht 6 kann ebenfalls als eine Deckplatte ausgestaltet sein.

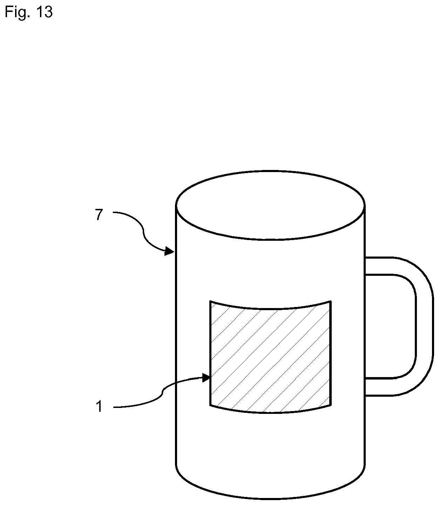

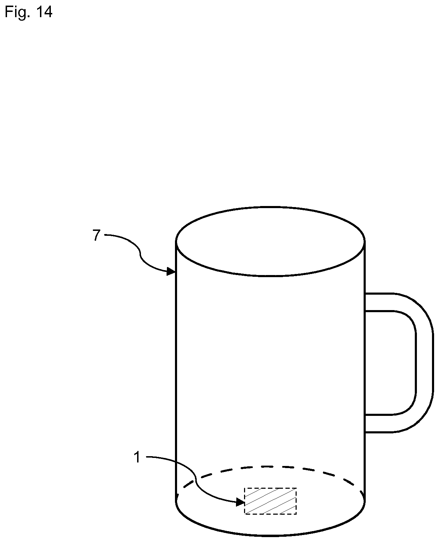

Fig. 13 und Fig. 14 zeigen einen Informationsträger 1 an einem Gegenstand 7. Vorteilhafterweise kann der erfindungsgemäße Informationsträger 1 auf einem Gegenstand 7, beispielsweise einer Tasse anbringbar sein. Hierdurch kann vorteilhafterweise einem Käufer eines Gegenstandes schnell und einfach eine digitale Information mittels des Informationsträgers 1 zukommen. Der Informationsträger 1 ist bevorzugt auf den Gegenstand 7 gedruckt, wobei der Informationsträger 1 auf eine ebene oder unebene Fläche aufgebracht werden kann.

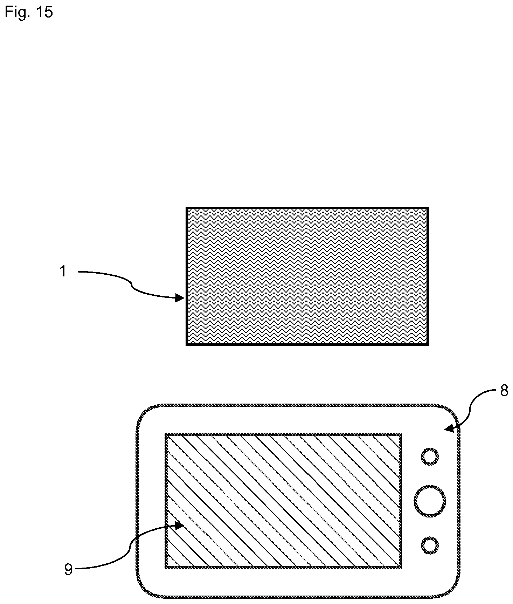

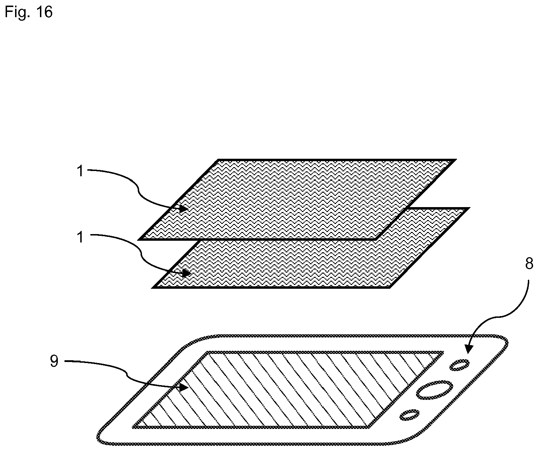

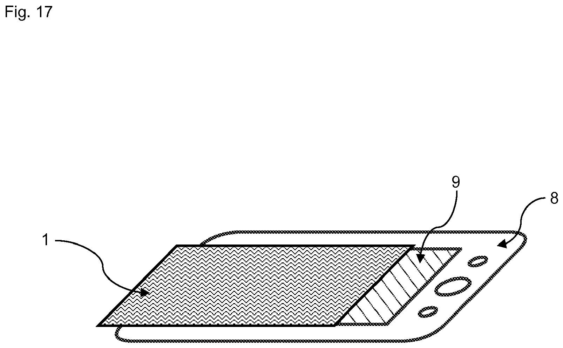

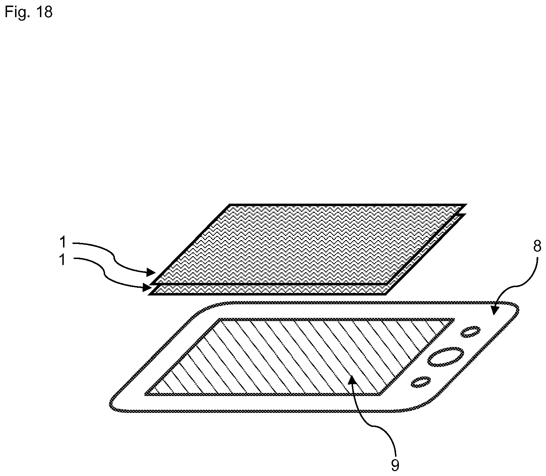

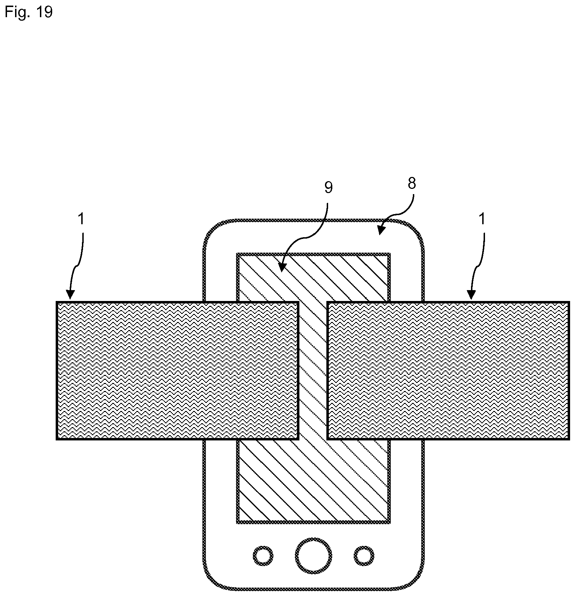

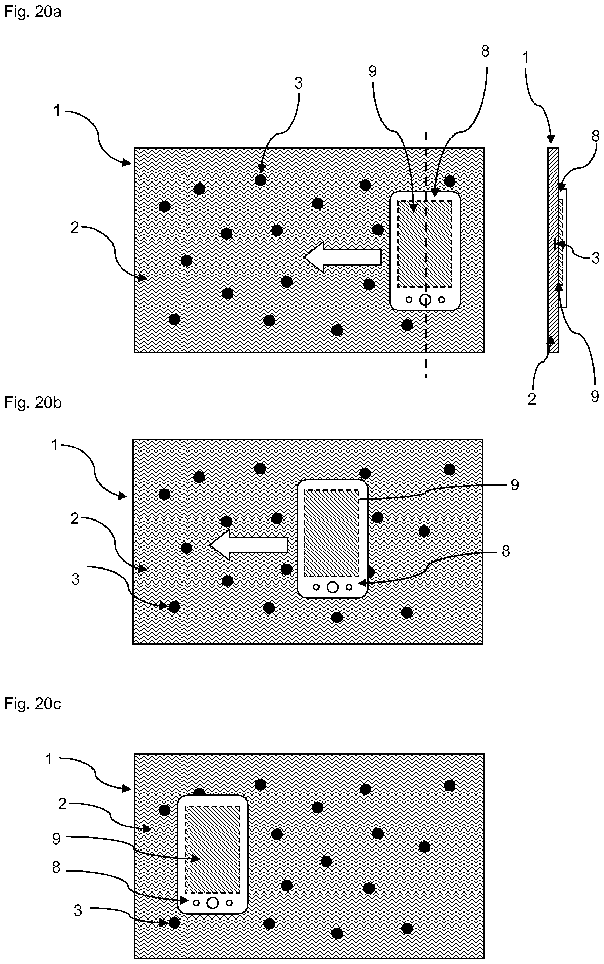

Fig. 15 bis Fig. 20 zeigen ein bevorzugtes System, umfassend einen oder mehrere Informationsträger 1 und einen Flächensensor 9. Der Informationsträger 1 mit den auf ihm gespeicherten Informationen kann mit einem Gerät mit Flächensensor 8, in Kontakt gebracht werden. Das Gerät mit Flächensensor 8 ist bevorzugt ein datenverarbeitendes Gerät. Der Informationsträger 1 kann beispielsweise nur bereichsweise mit dem Flächensensor 9 in Kontakt kommen. Es kann auch bevorzugt sein, dass der Informationsträger 1 nicht auf den Flächensensor 9 gelegt, sondern über diesen bewegt wird. Durch eine unterschiedliche Art und Weise der Kontaktherstellung oder Annäherung kann bevorzugt ein unterschiedliches Ereignis auf dem Flächensensor 9 ausgelöst werden. Außerdem können mehrere Informationsträger 1 mit dem Flächensensor 9 interagieren. In Fig. 20 wird der Flächensensor 9, d. h. das den Flächensensor aufweisende Gerät 8 über einen Informationsträger 1 bewegt, wobei der Informationsträger 1 mehrmals an unterschiedlichen Positionen mit dem Flächensensor 9 in Kontakt oder Annäherung kommen muss, damit die vollständige Information des Informationsträgers 1 auslesbar wird. Hierdurch können größere Informationsmengen in dem Informationsträger 1 gespeichert werden, weil damit der Informationsträger 1 größer als der Flächensensor 9 sein kann. Das Auslesen der Informationen durch das Gerät mit Flächensensor 8 kann bevorzugt durch Wisch-Bewegungen realisiert werden.

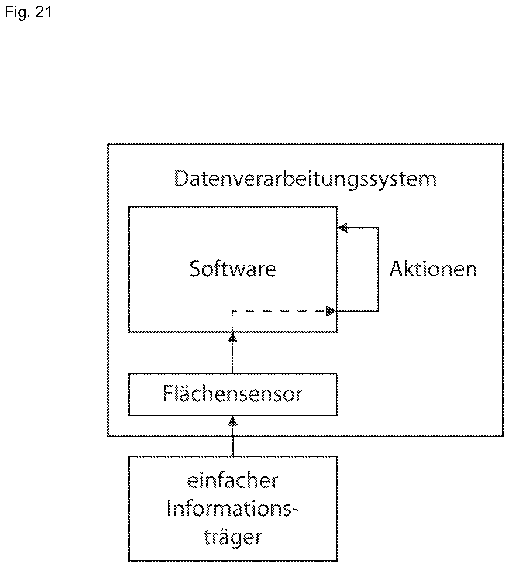

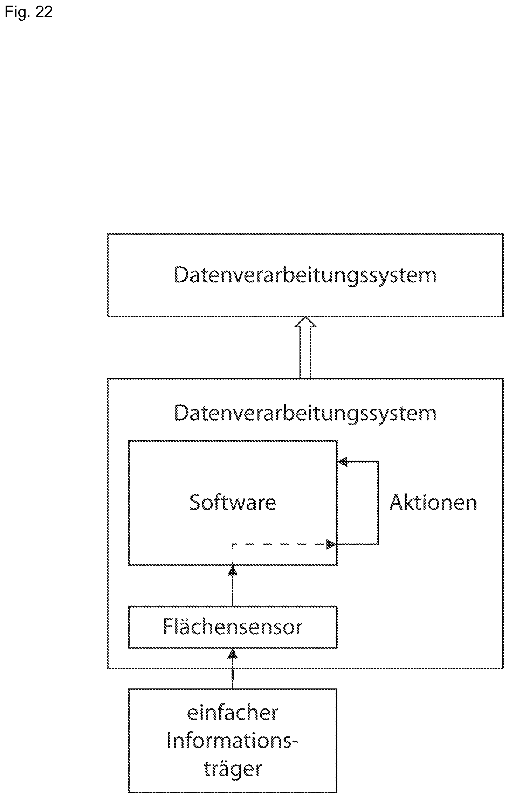

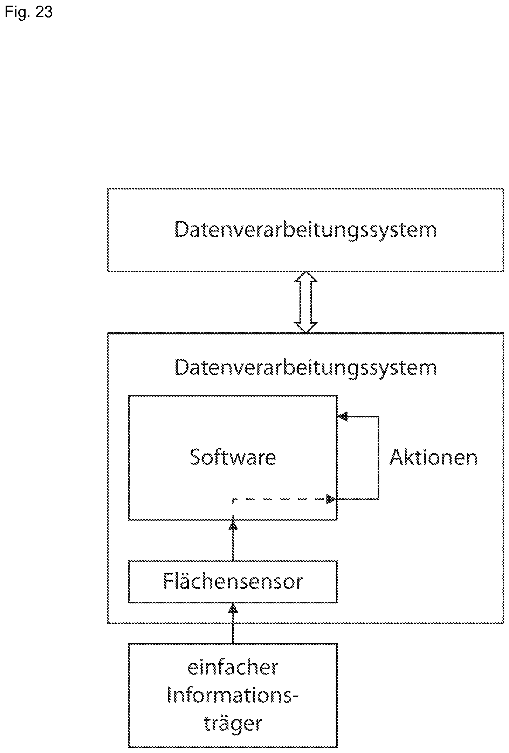

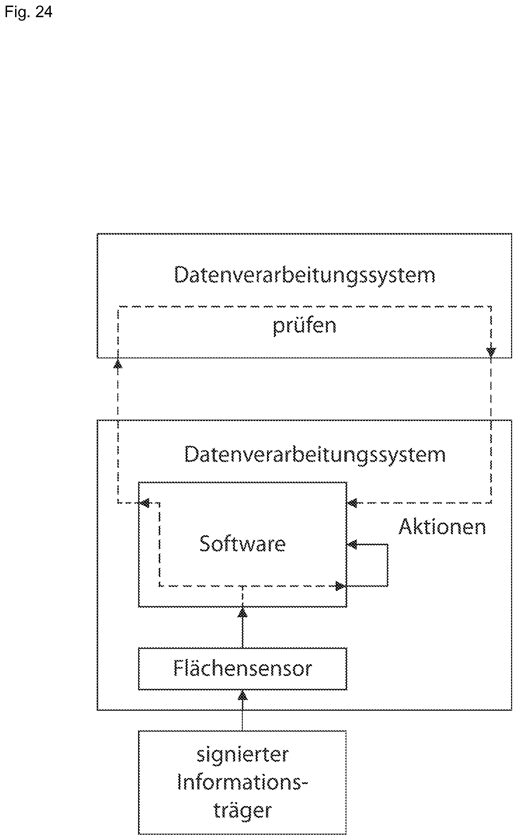

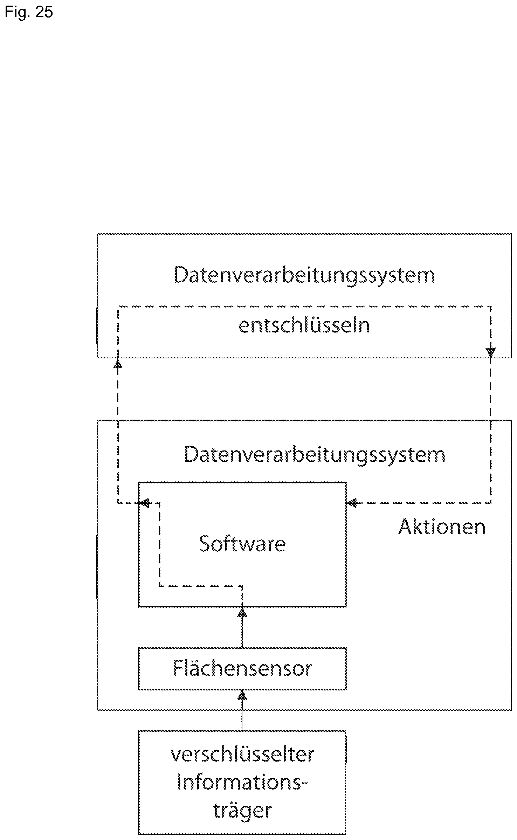

Fig. 21 bis Fig. 25 zeigen beispielhaft bevorzugte Anwendungen eines Informationsträgers. Der Informationsträger kann beispielsweise als einfacher Informationsträger genutzt werden (Fig. 21), der mit einem Flächensensor interagiert, wodurch bevorzugt ein Ereignis ausgelöst wird. Das Ereignis löst wiederum Aktionen aus, wie beispielsweise die Aktivierung und/oder das Beenden einer Anwendung, das Verändern von numerischen Werten und/oder Texten, das Manipulieren von Grafiken, das Verändern von Datenbeständen oder das Erlangen von Zugriff auf informationstechnische Dienste, ohne darauf beschränkt zu sein. Außerdem kann gemäß Fig. 22 über den Flächensensor, beispielsweise in Form eines kapazitiven Touchscreens eines Gerätes, der Programmablauf eines Datenverarbeitungssystems des Gerätes selbst beeinflusst werden. Die ausgelöste Aktion kann einseitig oder beidseitig sein, d. h. es kann eine Aktion ausgelöst werden, die auf ein externes Datenverarbeitungssystem einwirkt, wobei dieses wiederum auf das des datenverarbeitende Gerätes wirkt (siehe Fig. 23). Weiterhin kann der Informationsträger als signierter Informationsträger ausgestaltet sein (siehe Fig. 24), wobei bevorzugt ein Zusammenwirken zwischen dem datenverarbeitenden Gerät, einem Datennetz und einem Datenverarbeitungssystem entsteht. Der signierte Informationsträger kann so beispielsweise über das Internet überprüft und verifiziert werden. Mittels des erfindungsgemäßen Systems werden ein Zugang und/oder die Nutzung eines Datenverarbeitungssystems ermöglicht. Dazu ist das Gerät mittels des Informationsträgers über ein Datennetz mit einem Datenverarbeitungssystem verbunden. Nach Prüfung der Signatur im Datenverarbeitungssystem ist der Zugang über das Gerät gegeben. Weiterhin kann gemäß der Fig. 25 der Informationsträger auch verschlüsselt vorliegen, wobei dieser insbesondere mit einem Gerät, einem Datennetz und einem Datenverarbeitungssystem zusammenwirkt. Über den Flächensensor des Geräts wird eine Nutzung eines Datenverarbeitungssystems ermöglicht. Dazu ist das Gerät mittels eines Datennetzes mit dem Datenverarbeitungssystem verbunden. Nach positiver Prüfung des Informationsträgers im Datenverarbeitungssystem ist der Zugang über das Gerät gegeben.

**Bezugszeichenliste**

1 Informationsträger
2 Substrat
3 Touch-Punkt
4 Leiterbahn
5 Koppelfläche
6 Deckschicht
7 Gegenstand
8 Gerät mit Flächensensor
9 Flächensensor

**Patentansprüche**

**1.** System zur Übertragung von Informationen von einem Informationsträger (1) an einen kapazitiven Flächensensor (9), umfassend mindestens

a. einen Informationsträger (1), wobei der Informationsträger (1) mindestens eine, auf einem elektrisch nicht leitfähigen Substrat (2) zumindest bereichsweise aufgebrachte elektrisch leitfähige Schicht aufweist, und
b. einen kapazitiven Flächensensor (9),
**dadurch gekennzeichnet, dass**
die elektrisch leitfähige Schicht eine Anordnung von

i. mindestens zwei elektrisch leitfähigen Eingabebereichen (3) und einer Leiterbahn (4) oder
ii. mindestens einem elektrisch leitfähigen Eingabebereich (3), einer Leiterbahn (4) und einer Koppelfläche (5) zur Ankoppelung elektrischer Fremdkapazitäten aufweist,

wobei jeder Eingabebereich (3) eine Größe von 4 mm bis 15 mm aufweist,
die Leiterbahn (4) eine elektrisch leitende Verbindung zwischen den zwei Eingabebereichen (3) oder zwischen dem mindestens einen Eingabebereich (3) und der Koppelfläche (5) bildet,
der Flächensensor (9) kapazitive Touchscreens und/oder Touchpads aufweist und
der Informationsträger (1) mit dem Flächensensor (9) mindestens bereichsweise in Kontakt gebracht vorliegt, wodurch die mittels der elektrisch leitfähigen Schicht auf dem Informationsträger (1) aufgebrachten Informationen für den Flächensensor (9) kapazitiv auslesbar sind und die Position jedes Eingabebereiches (3) auf dem Flächensensor (9) bestimmt wird.

**2.** System nach Anspruch 1,
**dadurch gekennzeichnet, dass**
eine kapazitive Wechselwirkung zwischen dem Informationsträger (1) und dem Flächensensor (9) zur Übertragung der in dem Informationsträger (1) enthaltenen Informationen besteht.

**3.** System nach einem oder mehreren der vorherigen Ansprüche,
**dadurch gekennzeichnet, dass**
der Informationsträger (1) wenigstens eine, das Substrat (2) ganz oder teilweise überdeckende Deckschicht (6) aufweist.

**4.** System nach einem oder mehreren der vorherigen Ansprüche,
**dadurch gekennzeichnet, dass**
der Informationsträger (1) mit einem Gegenstand (7) verbunden ist oder der Gegenstand (7) selbst als Substrat (2) dient,
wobei der Gegenstand aus einer Gruppe umfassend eine Verpackung, Geschirr, Druckerzeugnisse, Kleidung, Möbel, Dokumente, Spielzeug, Konsumartikel, Lebensmittel, Halbzeuge, Maschinenteile, Baustoffe, Ein- und Mehrwegbehältnisse und/oder elektrische Gerate ausgewählt ist.

**5.** System nach Anspruch 2, 3 oder 4,
**dadurch gekennzeichnet, dass**
durch die kapazitive Wechselwirkung die Eingabebereiche (3) des Informationsträgers (1) für ein mit dem Flächensensor (9) verbundenes Datenverarbeitungssystem auswertbar werden und dieses mit dem Informationsträger (1) assoziierte Ereignisse auslösen kann.

**6.** System nach einem oder mehreren der vorherigen Ansprüche,
**dadurch gekennzeichnet, dass**
der Flächensensor (9) in einer Bewegung relativ zum Informationsträger (1) fortschreitend vollständig oder teilweise Informationen von dem Informationsträger (1) erhält.

**7.** System nach einem oder mehreren der vorherigen Ansprüche,
**dadurch gekennzeichnet, dass**
mehrere Informationsträger (1) in Kombination, insbesondere nebeneinander und/oder übereinander und/oder zeitlich nacheinander, mit dem Flächensensor (9) in Kontakt gebracht vorliegen.

**8.** System nach einem oder mehreren der vorherigen Ansprüche,
**dadurch gekennzeichnet, dass**
der Flächensensor (9) und/oder das den Flächensensor beinhaltende Gerät (8) ausgewählt ist aus der Gruppe umfassend Smartphones, Handys, Displays, Tablet-PCs, Tablet-Notebooks, Touchpad-Geräten, Grafiktabletts, Fernseher, PDAs, MP3-Player und Trackpads.

**9.** Verwendung des Systems nach einem oder mehreren der vorherigen Ansprüche zur kapazitiven Wechselwirkung zwischen dem Informationsträger (1) und dem Flächensensor (9).

**10.** Verwendung des Systems nach Anspruch 9,
**dadurch gekennzeichnet, dass**
der Informationsträger (1) einem Datensatz in einem Datenverarbeitungssystem zugeordnet ist.

**11.** Verwendung des Systems nach Anspruch 9 oder 10,
**dadurch gekennzeichnet, dass**
der Informationsträger (1) in Verbindung mit einem Flächensensor (9) über die Eingabebereiche (3) einer Aktion eines Datenverarbeitungssystems zugeordnet wird oder diese auslöst.

**12.** Verfahren zur Erfassung von Informationen, umfassend

a. Bereitstellung von mindestens einem Informationsträger (1), umfassend mindestens eine, auf einem elektrisch nicht leitfähigen Substrat (2) vorliegende elektrisch leitfähige Schicht,
b. Bereitstellung mindestens eines kapazitiven Flächensensors (9)
c. In Kontakt bringen des Informationsträgers (1) nach a. mit dem Flächensensor (9) nach b., wobei der Kontakt statisch und/oder dynamisch sein kann,
**dadurch gekennzeichnet, dass**
die elektrisch leitfähige Schicht eine Anordnung von

i. mindestens zwei elektrisch leitfähigen Eingabebereichen (3) und einer Leiterbahn (4) oder
ii. mindestens einem elektrisch leitfähigen Eingabebereich (3), einer Leiterbahn (4) und einer Koppelfläche (5) zur Ankoppelung elektrischer Fremdkapazitäten aufweist,

wobei jeder Eingabebereich (3) eine Größe von 4 mm bis 15 mm aufweist,
und die Leiterbahn (4) eine elektrisch leitende Verbindung zwischen den zwei Eingabebereichen (3) oder zwischen dem mindestens einen Eingabebereich (3) und der Koppelfläche (5) bildet
und durch das in Kontakt bringen des Informationsträgers (1) mit dem Flächensensor eine kapazitive Wechselwirkung zwischen Flächensensor (9) und Informationsträger (1) ausgelöst wird, wobei durch die kapazitive Wechselwirkung die Eingabebereiche des Informationsträgers (1) für ein mit dem Flächensensor (9) verbundenem Datenverarbeitungssystem auswertbar werden und mit dem Informationsträger (1) assoziierte Ereignisse auslösen können.

**Claims**

**1.** System for transmitting information from an information carrier (1) to a capacitive planar sensor (9), comprising at least

a. one information carrier (1), the information carrier (1) comprising at least one electrically conductive layer applied at least in regions to an electrically non-conductive substrate (2), and
b. a capacitive planar sensor (9),
**characterised in that**
the electrically conductive layer comprises an assembly of

i. at least two electrically conductive input regions (3) and a conducting track (4) or
ii. at least one electrically conductive input region (3), a conducting track (4) and a

coupling surface (5) for coupling external electrical capacitances,
each input region (3) having a size of 4 mm to 15 mm, the conducting path (4) forming an electrically conductive connection between the two input regions (3) or between the at least one input region (3) and the coupling surface (5),
the planar sensor (9) comprising capacitive touchscreens and/or touchpads and
the information carrier (1) having been brought into contact with the planar sensor (9) at least in regions, as a result of which the information applied to the information carrier (1) by means of the electrically conductive layer can be read out capacitively by the planar sensor (9) and the position of each input region (3) on the planar sensor (9) being determined.

**2.** System according to claim 1,
**characterised in that**
there is a capacitive interaction between the information carrier (1) and the planar sensor (9) for transmitting the information contained in the information carrier (1).

**3.** System according to one or more of the preceding claims,
**characterised in that**
the information carrier (1) comprises at least one cover layer (6) covering the substrate (2) in full or in part.

**4.** System according to one or more of the preceding claims,
**characterised in that**
the information carrier (1) is connected to an object (7) or the object (7) itself serves as the substrate (2),
the object being selected from a group comprising a pack, tableware, printed products, clothing, furniture, documents, toys, consumer products, foodstuffs, half-finished products, machine parts, building materials, disposable and reusable containers and/or electrical devices.

**5.** System according to claim 2, 3 or 4,
**characterised in that**
by means of the capacitive interaction, it becomes possible for a data processing system connected to the planar sensor (9) to evaluate the input regions (3) of the information carrier (1) and said data processing system can trigger events associated with the information carrier (1).

**6.** System according to one or more of the preceding claims,
**characterised in that**
the planar sensor (9) progressively acquires complete or partial information from the information carrier (1) in a movement relative to the information carrier (1).

**7.** System according to one or more of the preceding claims,
**characterised in that**
a plurality of information carriers (1) have been brought into contact with the planar sensor (9) in combination, in particular one next to the other and/or one over the other and/or one after the other in time.

**8.** System according to one or more of the preceding claims,
**characterised in that**
the planar sensor (9) and/or the device (8) containing the planar sensor is selected from the group consisting of smartphones, mobile phones, displays, tablet PCs, tablet notebooks, touchpad devices, graphics tablets, televisions, PDAs, MP3 players and trackpads.

**9.** Use of the system according to one or more of the preceding claims for the capacitive interaction between the information carrier (1) and the planar sensor (9).

**10.** Use of the system according to claim 9,
**characterised in that**
the information carrier (1) is assigned to a data set in a data processing system.

**11.** Use of the system according to claim 9 or 10,
**characterised in that**
the information carrier (1), in conjunction with a planar sensor (9), is assigned to or triggers an action of a data processing system via the input regions (3).

**12.** Method for acquiring information, comprising

a. providing at least one information carrier (1), comprising at least one electrically conductive layer applied to an electrically non-conductive substrate (2),
b. providing at least one capacitive planar sensor (9),
c. bringing the information carrier (1) according to a. into contact with the planar sensor (9) according to b., it being possible for the contact to be static and/or dynamic,
**characterised in that**
the electrically conductive layer comprises an assembly of

i. at least two electrically conductive input regions (3) and a conducting track (4) or
ii. at least one electrically conductive input region (3), a conducting track (4) and a

coupling surface (5) for coupling external electrical capacitances,
each input region (3) having a size of 4 mm to 15 mm,
and the conducting track (4) forming an electrically conductive connection between the two input regions (3) or between the at least one input region (3) and the coupling surface (5),
and, by bringing the information carrier (1) into contact with the planar sensor, a capacitive interaction between the planar sensor (9) and the information carrier (1) being triggered, and by means of the capacitive interaction, it becoming possible for a data processing system connected to the planar sensor (9) to evaluate the input regions (3) of the information carrier (1) and said input regions being able to trigger events associated with the information carrier (1).

## Revendications

**1.** Système de transmission d’informations d’un support d’informations (1) à un capteur de surface capacitif (9) comprenant au moins

a. un support d’informations (1), dans lequel le support d’informations (1) présente au moins une couche électroconductrice appliquée au moins par endroits sur un substrat non électroconducteur (2), et
b. un capteur de surface capacitif (9),
**caractérisé en ce que**

la couche électroconductrice présente un agencement

i. d'au moins deux zones d'entrée électroconductrices (3) et d'une piste conductrice (4) ou
ii. d'au moins une zone d'entrée électroconductrice (3), d'une piste conductrice (4) et d'une zone de couplage (5) pour coupler des capacités externes électriques,

dans lequel chaque zone d'entrée (3) présente une taille de 4 mm à 15 mm,
la piste conductrice (4) forme une connexion électroconductrice entre les deux zones d'entrée (3) ou entre la au moins une zone d'entrée (3) et la zone de couplage (5),
le capteur de surface (9) présente des écrans tactiles et/ou des pavés tactiles capacitifs et
le support d'informations (1) est amené en contact avec le capteur de surface (9) au moins par endroits, de sorte que les informations inscrites sur le support d'informations (1) au moyen de la couche électroconductrice sont lisibles de manière capacitive pour le capteur de surface (9) et la position de chaque zone d'entrée (3) est déterminée au niveau du capteur de surface (9).

2. Système selon la revendication 1,
**caractérisé en ce qu'**
il existe une interaction capacitive entre le support d'informations (1) et le capteur de surface (9) pour transmettre les informations contenues dans le support d'informations (1).

3. Système selon une ou plusieurs des revendications précédentes,
**caractérisé en ce que**
le support d'informations (1) présente au moins une couche de couverture (6) recouvrant totalement ou partiellement le substrat (2).

4. Système selon une ou plusieurs des revendications précédentes,
**caractérisé en ce que**
le support d'informations (1) est connecté à un article (7), ou
l'article (7) lui-même sert de substrat (2),
dans lequel l'article est sélectionné parmi un groupe comprenant un emballage, de la vaisselle, des imprimés, des vêtements, des meubles, des documents, des jouets, des biens de consommation, des produits alimentaires, des produits semi-finis, des pièces de machine, des matériaux de construction, des récipients à jeter et réutilisables et/ou des appareils électriques.

5. Système selon la revendication 2, 3 ou 4,
**caractérisé en ce que**
les zones d'entrée (3) du support d'informations (1) pour un système de traitement de données connecté au capteur de surface (9) peuvent être évaluées par l'interaction capacitive, ce qui peut déclencher des événements associés au support d'informations (1).

6. Système selon une ou plusieurs des revendications précédentes,
**caractérisé en ce que**
le capteur de surface (9), dans un déplacement par rapport au support d'informations (1), reçoit progressivement des informations complètes ou partielles en provenance du support d'informations (1).

7. Système selon une ou plusieurs des revendications précédentes,
**caractérisé en ce que**
plusieurs supports d'informations (1) en combinaison, en particulier les uns à côté des autres et/ou les uns au-dessus des autres et/ou à la suite, sont amenés en contact avec le capteur de surface (9).

8. Système selon une ou plusieurs des revendications précédentes,
**caractérisé en ce que**
le capteur de surface (9) et/ou l'appareil (8) incluant le capteur de surface est sélectionné dans le groupe comprenant les smartphones, les téléphones portables, les écrans, les tablettes PC, les ordinateurs portables, les tablettes tactiles, les tablettes graphiques, les téléviseurs, les assistants numériques personnels, les lecteurs MP3 et les pavés tactiles.

9. Utilisation du système selon une ou plusieurs des revendications précédentes pour une interaction capacitive entre le support d’informations (1) et le capteur de surface (9).

**10.** Utilisation du système selon la revendication 9,
**caractérisée en ce que**
le support d’informations (1) est associé à un ensemble de données dans un système de traitement de données.

**11.** Utilisation du système selon la revendication 9 ou 10,
**caractérisée en ce que**
le support d’informations (1) connecté à un capteur de surface (9) est associé à ou déclenche une action d’un système de traitement de données via les zones d’entrée (3).

**12.** Procédé de collecte d’informations, comprenant les étapes consistant à

a. fournir au moins un support d’informations (1), comprenant au moins une couche électroconductrice présente sur un substrat non électroconducteur (2),
b. fournir au moins un capteur de surface capacitif (9)
c. amener en contact le support d’informations (1) de a. avec le capteur de surface (9) de b., dans lequel le contact peut être statique et/ou dynamique,
**caractérisé en ce que**
la couche électroconductrice présente un agencement

i. d’au moins deux zones d’entrée électroconductrices (3) et d’une piste conductrice (4) ou
ii. d’au moins une zone d’entrée électroconductrice (3), d’une piste conductrice (4) et d’une surface de couplage (5) pour coupler des capacités externes électriques,

dans lequel chaque zone d’entrée (3) présente une taille de 4 mm à 15 mm, et la piste conductrice (4) forme une connexion électroconductrice entre les deux zones d’entrée (3) ou entre la au moins une zone d’entrée (3) et la zone de couplage (5),
et par l’amenée en contact du support d’informations (1) avec le capteur de surface, une interaction capacitive est déclenchée entre le capteur de surface (9) et le support d’informations (1), de sorte que les zones d’entrée du support d’informations (1) pour un système de traitement de données connecté au capteur de surface (9) peuvent être évaluées par l’interaction capacitive, et peuvent déclencher des événements associés au support d’informations (1).

Fig. 1

1
2
3
3
3

Fig. 2

1
2
3
3
3

Fig. 3

1
2
3
3
3
3

Fig. 4

1
2
3
3
3
3

Fig. 5a
1
2
3
3
3
Fig. 5b
3
3
1
2

Fig. 6

1
2
4

Fig. 7

1
2
3
4
3
4
3

Fig. 8

2
1
4
3
4
3
4
4
3
4
5

Fig. 9

1
5
4
3
4
2
3
4
4
3
4

Fig. 10

1
3; 5
4
3; 5
4
3; 5
4
4
2
3; 5
4
3; 5

Fig. 11

1
5
4
3
4
2
3
4
3
3
4
5
3
4

Fig. 12a

1
3
3
3

Fig. 12b

2
6
3
3

Fig. 13

7
1

Fig. 14

7
1

Fig. 15

1
8
9

Fig. 16

1
1
8
9

Fig. 17

9
8
1

Fig. 18

1
1
8
9

Fig. 19

1
9
8
1

Fig. 20a

1
3
9
8
1
8
2
3
2
9

Fig. 20b

1
2
3
9
8

Fig. 20c

1
2
9
8
3

Fig. 21

Datenverarbeitungssystem
Software
Aktionen
Flächensensor
einfacher Informations-träger

Fig. 22

Datenverarbeitungssystem
Datenverarbeitungssystem
Software
Aktionen
Flächensensor
einfacher Informations-träger

Fig. 23

Datenverarbeitungssystem
Datenverarbeitungssystem
Software
Aktionen
Flächensensor
einfacher Informations-träger

Fig. 24

Datenverarbeitungssystem
prüfen
Datenverarbeitungssystem
Software
Aktionen
Flächensensor
signierter Informations-träger

Fig. 25

Datenverarbeitungssystem
entschlüsseln
Datenverarbeitungssystem
Software
Aktionen
Flächensensor
verschlüsselter
Informations-
träger

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1803562 A
- US 5818019 A
- US 3719804 A
- US 4587410 A
- US 20060118612 A
- EP 2088532 A1
- US 2006097991 A1
- DE 102005042089 A1

### In der Beschreibung aufgeführte Nicht-Patentliteratur

- *mTouch Projected Capacitive Touch Screen Sensing Theory of Operation,* 05. Januar 2010, ISBN 978-1-60-932466-7, 1-16